(19) Europäisches Patentamt
European Patent Office
Office européen des brevets

(11) **EP 4 076 993 B1**

(12) **FASCICULE DE BREVET EUROPEEN**

(45) Date de publication et mention de la délivrance du brevet:
**20.11.2024 Bulletin 2024/47**

(21) Numéro de dépôt: **20845175.7**

(22) Date de dépôt: **11.12.2020**

(51) Classification Internationale des Brevets (IPC):
**B60C 11/03** *(2006.01)*    **B60C 11/13** *(2006.01)*
**B60C 11/04** *(2006.01)*

(52) Classification Coopérative des Brevets (CPC):
**B60C 11/1307; B60C 11/0309; B60C 11/1323; B60C 11/1353;** B60C 2011/1338; B60C 2011/1361; B60C 2200/06; B60C 2200/065

(86) Numéro de dépôt international:
**PCT/FR2020/052386**

(87) Numéro de publication internationale:
**WO 2021/123580 (24.06.2021 Gazette 2021/25)**

(54) **BANDE DE ROULEMENT DE PNEUMATIQUE POUR VEHICULE LOURD COMPRENANT DES PROTUBERANCES ANTI-BRUIT ET CHASSE-PIERRES**

LUFTREIFENLAUFFLÄCHE FÜR SCHWERLASTFAHRZEUGE MIT STEINABWEISENDEN UND GERÄUSCHVERHINDERNDEN AUSSTÜLPUNGEN

PNEUMATIC TYRE TREAD FOR A HEAVY DUTY VEHICLE COMPRISING STONE-EXPELLING AND NOISE-PREVENTING PROTUBERANCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2019 FR 1914861**

(43) Date de publication de la demande:
**26.10.2022 Bulletin 2022/43**

(73) Titulaire: **COMPAGNIE GENERALE DES ETABLISSEMENTS MICHELIN**
**63000 Clermont-Ferrand (FR)**

(72) Inventeurs:
• **NUGIER, Franck**
**63040 CLERMONT FERRAND Cedex 9 (FR)**
• **ROPARS, Olivier**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2009/084666    DE-A1- 102007 016 930**
**JP-A- 2003 165 310**

**Description**

La présente invention a pour objet une bande de roulement de pneumatique pour véhicule lourd, destiné à porter de lourdes charges et à rouler sur des sols pierreux ou sur des sols goudronnés, et, plus particulièrement, une bande de roulement de pneumatique pour un véhicule de génie civil de type grue mobile, destiné à se déplacer d'un chantier à un autre pour faire du levage de charges lourdes.

Une bande de roulement comprend au moins un matériau à base de caoutchouc et est destinée à constituer la partie périphérique d'un pneumatique et à être usée lors de l'entrée en contact de sa surface de roulement avec un sol.

Une bande de roulement peut être définie par trois dimensions : une épaisseur, selon une direction radiale, une largeur, selon une direction transversale, et une longueur, selon une direction longitudinale. Lorsqu'une bande de roulement est intégrée au pneumatique, la direction transversale est également appelée direction axiale, car elle est parallèle à l'axe de rotation du pneumatique, et la direction longitudinale est également appelée direction circonférentielle, car elle est tangente à la circonférence du pneumatique selon la direction de roulage du pneumatique.

Pour garantir en particulier une performance satisfaisante en adhérence longitudinale, sous couple moteur et sous couple freineur, et en adhérence transversale, il est nécessaire de former, dans la bande de roulement, une sculpture qui est un système plus ou moins complexe de découpures, ou creux, séparant des éléments en relief par rapport à une surface de fond.

Dans le cas d'une bande de roulement de pneumatique pour véhicule lourd de génie civil, les éléments en relief sont généralement des blocs. Un bloc est un volume de matière caoutchouteuse délimité par une face de contact, contenue dans la surface de roulement, par une surface de fond et par des faces latérales reliant la face de contact à la surface de fond. Ces blocs peuvent être arrangés de façon à constituer des rangées longitudinales de blocs, ces rangées étant deux à deux séparées par des creux longitudinaux, appelés également sillons longitudinaux ou plus simplement sillons. Un creux longitudinal a une ligne moyenne non nécessairement rectiligne ayant en chaque point une tangente formant avec la direction longitudinale un angle compris entre 0° et 45°. En outre, au sein d'une même rangée longitudinale de blocs, les blocs sont le plus souvent deux à deux séparés par des creux transversaux. Un creux transversal a une ligne moyenne non nécessairement rectiligne ayant en chaque point une tangente formant avec la direction transversale un angle compris entre 0° et 45°. Ainsi les creux respectivement longitudinaux et transversaux forment un réseau de découpures séparant les blocs.

La bande de roulement, intégrée au pneumatique, est le plus souvent caractérisée géométriquement par une largeur transversale $W_T$, selon la direction transversale, et une épaisseur radiale $H_T$, selon une direction radiale. La largeur transversale $W_T$ est définie comme la largeur transversale de la surface de contact de la bande de roulement du pneumatique neuf avec un sol lisse, tel qu'un sol goudronné, lorsque le pneumatique est soumis à des conditions de pression et de charge nominales recommandées, par exemple, par la norme de la « European Tyre and Rim Technical Organization » ou E.T.R.T.O. (Organisation technique européenne du pneumatique et de la roue). L'épaisseur radiale $H_T$ est définie, par convention, comme la profondeur radiale maximale mesurée dans les creux, correspondant à la hauteur radiale de bloc maximale. Dans le cas d'un pneumatique pour véhicule de génie civil de type grue mobile, et à titre d'exemple, la largeur transversale $W_T$ est au moins égale à 300 mm et l'épaisseur radiale $H_T$ est au moins égale à 20 mm, voire 25 mm.

Les conditions usuelles de roulage d'un pneumatique pour véhicule lourd de type grue mobile sont généralement mixtes, à la fois hors la route, sur des sols pierreux, et sur route, sur des sols goudronnés.

Lorsque le pneumatique roule sur un sol pierreux, sa bande de roulement est susceptible de retenir des pierres dans ses creux longitudinaux et transversaux, et en particulier au niveau des zones d'intersection entre un creux longitudinal et un creux transversal. Ces pierres retenues par les creux de la bande de roulement sont alors susceptibles de créer des perforations de la bande de roulement, pouvant entrainer un endommagement de l'armature de sommet du pneumatique, radialement intérieure à la bande de roulement, et, à terme, une rupture de ladite armature de sommet rendant le pneumatique inutilisable. Des dispositifs d'éjection des pierres, sous la forme de protubérances de forme et de taille adaptées, ont été décrits dans les documents EP 3178669, WO 0132448 et WO 2009082394.

Lorsque le pneumatique roule sur un sol goudronné, à plus grande vitesse, sa bande de roulement est susceptible de générer un bruit, en particulier en raison de la présence de creux longitudinaux dans lesquels se propagent des ondes sonores aériennes. Des dispositifs d'amortissement de ces ondes sonores, appelés usuellement dispositifs anti-bruit, souvent sous la forme d'obstacles souples formant une barrière au moins partielle dans les creux longitudinaux, ont été décrits dans les documents WO 2013171172 et WO 2012001031.

Les inventeurs se sont donnés pour objectif d'améliorer, pour une bande de roulement de pneumatique pour véhicule lourd à usage mixte hors la route et sur route, à la fois sa capacité à ne pas retenir des pierres dans ses creux, lors d'un usage hors la route, et sa capacité à amortir le bruit qu'elle génère, lors d'un usage sur route.

Cet objectif a été atteint par une bande de roulement de pneumatique pour véhicule lourd, destinée à entrer en contact avec un sol par l'intermédiaire d'une surface de roulement et comprenant des découpures délimitant des blocs en caoutchouc s'étendant à partir d'une surface de fond selon une direction radiale,

- au moins une découpure étant un sillon longitudinal, délimité par deux parois latérales en vis-à-vis raccordées entre elles par un fond de sillon, et s'étendant sur toute la longueur L de la bande de roulement selon une direction longitudinale,
- tout sillon longitudinal ayant une profondeur H, mesurée entre la surface de roulement et le fond de sillon selon une direction radiale, et une largeur W, mesurée entre les deux parois latérales dans la surface de roulement selon une direction transversale,
- au moins un sillon longitudinal comprenant une distribution longitudinale de protubérances adossées à l'une ou l'autre des parois latérales, deux protubérances consécutives, non nécessairement adossées à la même paroi latérale, étant espacées d'un pas P,
- toute protubérance du sillon longitudinal s'étendant radialement vers l'extérieur à partir du fond de sillon sur une hauteur H' au moins égale à 0.9 fois la profondeur H du sillon
- et toute protubérance du sillon longitudinal comprenant une première portion, s'étendant radialement vers l'extérieur à partir du fond de sillon sur une hauteur H1, transversalement vers l'intérieur du sillon longitudinal à partir d'une paroi latérale sur une largeur W1 et longitudinalement sur une épaisseur T1, et une deuxième portion, s'étendant radialement vers l'extérieur à partir de la première portion sur une hauteur H2, transversalement vers l'intérieur du sillon longitudinal à partir d'une paroi latérale sur une largeur W2 et longitudinalement sur une épaisseur T2, de telle sorte que les relations suivantes sont vérifiées :

$$H'=H1+H2$$

$$0.6*H'<=H2<=0.9*H'$$

$$W2>=0.25*W$$

$$T2<=\min(3 \text{ mm}; 1/3*T1)$$

$$W1>=0.5*W$$

$$T1>=H1$$

La bande de roulement selon l'invention comprend de façon essentielle, dans au moins un sillon longitudinal, une distribution longitudinale de protubérances, chaque protubérance, adossée à l'une ou l'autre des parois latérales du sillon, ayant une double fonction de barrière anti-bruit et de chasse-pierres. Une barrière anti-bruit contribue à l'amortissement des ondes sonores aériennes se propageant dans le sillon longitudinal, lors du roulage du pneumatique sur un sol goudronné. Un chasse-pierres a pour fonction de favoriser l'éjection des pierres retenues dans les creux, lors du roulage du pneumatique sur un sol pierreux, et d'empêcher l'agression du fond de sillon par celles-ci. Les protubérances sont adossées à l'une ou l'autre des parois latérales, et deux protubérances consécutives, selon la direction longitudinale, non nécessairement adossées à la même paroi latérale, sont espacées d'un pas P, distance longitudinale entre lesdites deux protubérances.

Pour assurer cette double fonction, chaque protubérance comprend une première portion radialement intérieure, s'appuyant à la fois sur le fond de sillon et sur une paroi latérale et assurant la fonction de chasse-pierres, et une deuxième portion radialement extérieure, s'appuyant à la fois sur la partie radialement extérieure de la première portion et sur la même paroi latérale et assurant la fonction anti-bruit.

Toutes les caractéristiques géométriques décrites ci-après sont mesurées sur une bande de roulement de pneumatique à l'état neuf.

La première, respectivement deuxième, portion de la protubérance est géométriquement caractérisée par une hauteur H1, respectivement H2, selon une direction radiale, par une largeur W1, respectivement W2, selon la direction transversale, et une épaisseur T1, respectivement T2, selon la direction longitudinale. Les hauteurs, les largeurs et les épaisseurs sont des valeurs moyennes mesurées selon les directions correspondantes.

Selon une première caractéristique essentielle, toute protubérance du sillon longitudinal s'étend radialement vers l'extérieur à partir du fond de sillon sur une hauteur H' au moins égale à 0.9 fois la profondeur H du sillon. La hauteur H' de la protubérance est la somme des hauteurs H1 et H2 respectives de la première et de la deuxième portion, et correspond à une hauteur totale moyenne de la protubérance, celle-ci pouvant être variable dans les directions transversale et/ou longitudinale. La profondeur H du sillon est la profondeur maximale mesurée entre la surface de roulement et le point le plus radialement intérieur du fond de sillon, dans le plan moyen longitudinal du sillon longitudinal. Une hauteur H' de protubérance au moins égale à 0.9 fois la profondeur H du sillon longitudinal vise à garantir la présence de la protubérance sur la quasi-totalité de la profondeur du sillon, pour une bonne efficacité de barrière anti-bruit.

Une deuxième caractéristique essentielle est exprimée par l'inégalité 0.6*H'<=H2<=0.9*H'. En d'autres termes, la deuxième portion doit avoir une hauteur H2 au moins égale à 60% et au plus égale à 90% de la hauteur totale H' de la protubérance. En dessous de 60%, la hauteur H2 est insuffisante pour garantir une souplesse de la deuxième portion adaptée à l'amortissement des ondes sonores. Au-dessus de 90%, la hauteur H1 de la première portion devient inférieure à 10% de la hauteur H', ce qui est insuffisant pour assurer la protection du fond de sillon.

Une troisième caractéristique essentielle est exprimée par l'inégalité W2>=0.25*W. En d'autres termes, la deuxième portion doit avoir une largeur W2 au moins égale à 25% de la largeur W du sillon. A partir de 25%, la première portion est suffisamment large, donc obstrue suffisamment le sillon longitudinal pour jouer son rôle de barrière anti-bruit.

Une quatrième caractéristique essentielle est exprimée par l'inégalité T2<=min (3 mm; 1/3*T1). Autrement dit, l'épaisseur T2 de la deuxième portion doit rester inférieure d'une part à 3 mm, et d'autre part au tiers de l'épaisseur T1 de la première portion. Au-delà d'une épaisseur égale à 3 mm, la deuxième portion devient trop rigide, donc insuffisamment déformable vis-à-vis de l'amortissement du bruit. Cette déformabilité peut également être intéressante, vis-à-vis de la fonction chasse-pierres, puisqu'une deuxième portion souple ne bloque pas la mobilité des pierres dans le sillon longitudinal et donc ne contrarie pas leur éjection éventuelle. De plus, pour garantir un ancrage robuste de la deuxième portion sur la première portion, il est avantageux que l'épaisseur T2 de la deuxième portion soit très inférieure à l'épaisseur T1 de la première portion : un tiers de l'épaisseur T1 a été estimée comme une borne maximale pertinente.

Selon une cinquième caractéristique essentielle, l'inégalité W1>=0.5*W doit être vérifiée. La largeur W1 de la première portion doit être au moins égale à 50% de la largeur W du sillon longitudinal, pour garantir un bon recouvrement transversal du fond de sillon par la protubérance et, par conséquent, son effet de protection vis-à-vis des pierres emprisonnées dans le sillon longitudinal.

La sixième et dernière caractéristique essentielle de l'invention est exprimée par l'inégalité T1>=H1. L'épaisseur T1 de la première portion doit être au moins égale à sa hauteur H1, pour garantir un bon recouvrement longitudinal du fond de sillon par la protubérance et, par conséquent, son effet de protection vis-à-vis des pierres emprisonnées dans le sillon longitudinal.

Ainsi la combinaison des caractéristiques essentielles précédemment décrites permet à des protubérances étagées, telles que décrites dans l'invention, d'assurer efficacement leur double fonction de barrière anti-bruit et de chasse-pierres.

Selon un mode de réalisation préféré, les protubérances du sillon longitudinal sont alternativement adossées à l'une ou l'autre des parois latérales. Ce positionnement alterné des protubérances sur l'une et l'autre des parois signifie que deux protubérances consécutives ne sont pas adossées à la même paroi, mais en contact avec des parois en vis-à-vis. Cette alternance garantit une fermeture quasi-complète du sillon longitudinal, par recouvrement des protubérances positionnées sur des parois en vis-à-vis, et donc une barrière quasi-totale vis-à-vis de la propagation des ondes sonores.

Avantageusement, les protubérances du sillon longitudinal sont deux à deux espacées d'un pas P au plus égal à 0.1 fois la longueur L de la bande de roulement. Sachant que, lorsque le pneumatique est soumis à des conditions de charge et de pression nominales, l'aire de contact de la bande de roulement avec le sol a une longueur longitudinale de l'ordre de 0.1 fois la longueur L de la bande de roulement, cette condition implique la présence d'au moins deux protubérances dans l'aire de contact fermant le sillon longitudinal dans l'aire de contact et évitant ainsi la formation d'un tuyau, entre la bande de roulement et le sol, susceptible de générer du bruit. Il est à noter que le pas P entre deux protubérances consécutives n'est pas nécessairement constant.

Préférentiellement toute protubérance du sillon longitudinal s'étend radialement vers l'extérieur à partir du fond de sillon sur une hauteur H' égale à la profondeur H du sillon, ce qui garantit la présence d'une barrière anti-bruit sur toute la profondeur du sillon longitudinal, d'où un amortissement optimum du bruit.

Avantageusement la deuxième portion s'étend longitudinalement sur une épaisseur T2 au moins égale à 1 mm. En dessous d'une épaisseur de 1 mm, la barrière anti-bruit devient insuffisamment robuste mécaniquement.

Encore avantageusement la deuxième portion s'étend vers l'intérieur du sillon longitudinal à partir d'une paroi latérale sur une largeur W2 au plus égale à 0.75 fois la largeur W du sillon longitudinal. Au-delà d'une largeur égale à 75% de la largeur du sillon longitudinal, la barrière anti-bruit devient insuffisamment robuste mécaniquement.

Avantageusement la première portion s'étend longitudinalement sur une épaisseur T1 au plus égale à 4 fois la hauteur H1. Cette condition permet de limiter l'épaisseur, c'est-à-dire la dimension longitudinale de la première portion, et donc son volume par rapport au volume du sillon longitudinal. Ceci permet de limiter la réduction du volume de creux disponible et, par conséquent, la capacité du sillon à stocker ou drainer l'eau ou la boue éventuellement présente sur le sol.

Selon un mode de réalisation préféré, la première portion comprend des faces latérales formant, avec la direction transversale, un angle au plus égal à 45°. Dans ce cas, la première portion a une forme de pyramide dont les faces latérales inclinées facilitent la mobilité des pierres dans le sillon longitudinal, et donc leur éjection à l'extérieur de la bande de roulement, au cours du roulage du pneumatique.

Dans le cas particulier d'un sillon longitudinal comprenant au moins une intersection avec une rainure transversale, toute intersection du sillon longitudinal et d'une rainure transversale est pourvue d'une protubérance. En effet, toute intersection entre le sillon longitudinale et une rainure transversale est une zone préférentielle pour le piégeage des pierres. Par conséquent il est avantageux de placer une protubérance à cette intersection particulièrement sensible à la rétention des pierres.

Dans une variante avantageuse du mode de réalisation précédent, la première portion s'étend vers l'intérieur du sillon longitudinal à partir d'une paroi latérale sur une largeur W1 au plus égale à 2 fois la largeur W du sillon longitudinal. Dans ces conditions, la première portion recouvre à la fois le fond du sillon longitudinal et une partie du fond de la rainure transversale, et protège donc ces deux zones.

L'invention a également pour objet un pneumatique pour véhicule lourd, de préférence un véhicule lourd de génie civil de type grue mobile, comprenant une bande de roulement selon l'un quelconque des modes de réalisation précédemment décrits.

Les caractéristiques de l'invention sont illustrées par les figures 1, 2A, 2B, 2C et 3 schématiques et non représentées à l'échelle:

- Figure 1 : Vue de dessus d'une portion de bande de roulement selon l'invention,
- Figure 2A: Vue en perspective d'une protubérance d'un sillon longitudinal de bande de roulement selon l'invention,
- Figure 2B: Vue en coupe transversale d'une protubérance d'un sillon longitudinal de bande de roulement selon l'invention,
- Figure 2C: Vue de dessus d'une protubérance d'un sillon longitudinal de bande de roulement selon l'invention,
- Figure 3: Vue en perspective d'une protubérance positionnée à l'intersection d'un sillon longitudinal et d'un creux transversal selon un mode de réalisation préféré de l'invention.

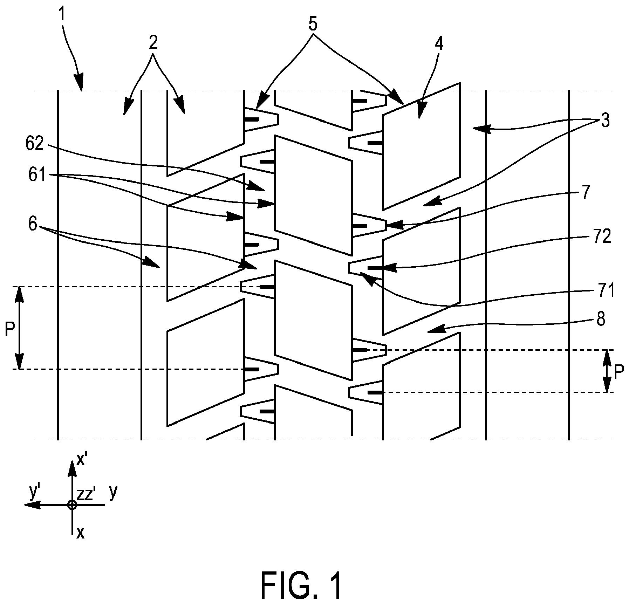

La figure 1 est une vue de dessus d'une portion de bande de roulement 1 selon l'invention. La bande de roulement 1 de pneumatique pour véhicule lourd, destinée à entrer en contact avec un sol par l'intermédiaire d'une surface de roulement 2, comprend des découpures 3 délimitant des blocs 4 en caoutchouc s'étendant à partir d'une surface de fond 5 selon une direction radiale ZZ'. Les découpures 3 de la bande de roulement 1 sont soit des sillons longitudinaux 6, soit des creux transversaux 8. Dans le mode de réalisation représenté, sur les quatre sillons longitudinaux 6, délimités chacun par deux parois latérales 61 en vis-à-vis raccordées entre elles par un fond de sillon 62, et s'étendant sur toute la longueur L de la bande de roulement 1 selon une direction longitudinale XX', deux d'entre eux, positionnés dans une portion centrale de la bande de roulement 1, comprennent chacun une distribution longitudinale de protubérances 7 adossées alternativement à l'une et l'autre des parois latérales 61, deux protubérances consécutives positionnées respectivement sur deux parois latérales 61 en vis-à-vis étant espacées d'un pas P. Le pas P est variable car lesdites protubérances 7 sont exclusivement positionnées, dans le mode de réalisation représenté, à l'intersection d'un sillon longitudinal 6 et d'un creux transversal 8. Seuls les sillons longitudinaux centraux sont pourvus de protubérances 7, car la portion centrale est soumise aux plus fortes pressions de contact et est donc la plus sensible à la rétention de pierres.

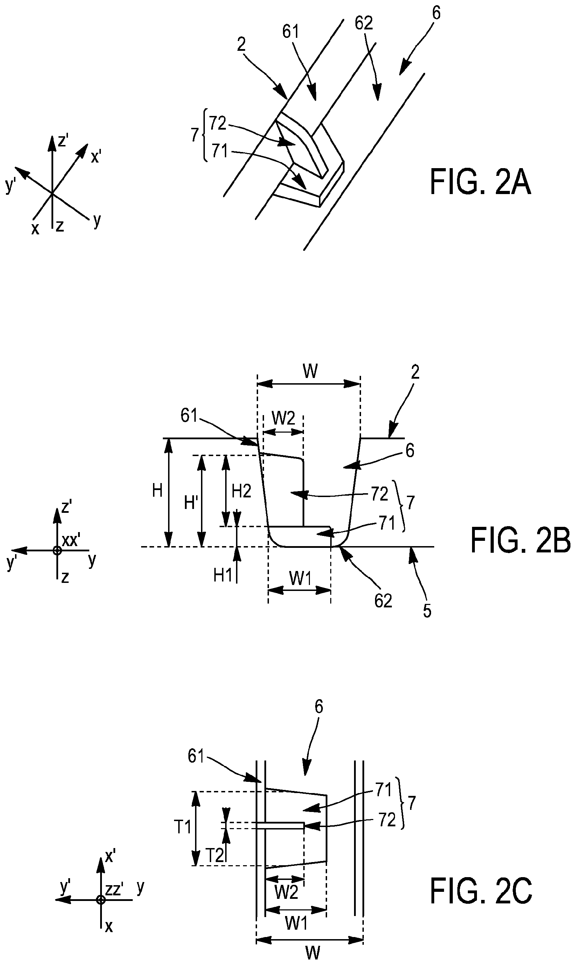

La figure 2A est une vue en perspective d'une protubérance 7 d'un sillon longitudinal 6 de bande de roulement selon l'invention. La protubérance 7 du sillon longitudinal 6 comprend une première portion 71, s'étendant radialement vers l'extérieur à partir du fond de sillon 62 positionné sur la surface de fond 5, et s'appuyant sur la paroi latérale 61, et une deuxième portion 72, s'étendant radialement vers l'extérieur à partir de la première portion 71 et s'appuyant sur la paroi latérale 61. La première portion 71 radialement intérieure assure la fonction de chasse-pierres, et la deuxième portion 72 radialement extérieure assure la fonction anti-bruit.

La figure 2B est une vue en coupe transversale d'une protubérance 7 d'un sillon longitudinal 6 de bande de roulement selon l'invention. La protubérance 7 du sillon longitudinal 6 s'étend radialement, selon la direction ZZ', vers l'extérieur à partir du fond de sillon 62 sur une hauteur H' au moins égale à 0.9 fois la profondeur H du sillon 6. La première portion 71 s'étend radialement, selon la direction ZZ', vers l'extérieur à partir du fond de sillon 62 sur une hauteur H1, et transversalement, selon la direction YY', vers l'intérieur du sillon longitudinal 6 à partir d'une paroi latérale 61 sur une largeur W1. La deuxième portion 72 s'étend radialement, selon la direction ZZ', vers l'extérieur à partir de la première portion 71 sur une hauteur H2 et transversalement, selon la direction YY', vers l'intérieur du sillon longitudinal 6 à partir d'une paroi latérale 61 sur une largeur W2. Selon l'invention, les relations suivantes entre les caractéristiques géométriques précédemment décrites sont vérifiées : H'=H1+H2, 0.6*H'<=H2<=0.9*H', W2>=0.25*W et W1>=0.5*W.

La figure 2C est une vue de dessus d'une protubérance 7 d'un sillon longitudinal 6 de bande de roulement selon l'invention. La première portion 71 s'étend transversalement, selon la direction YY', vers l'intérieur du sillon longitudinal 6 à partir d'une paroi latérale 61 sur une largeur W1 et longitudinalement, selon la direction XX', sur une épaisseur T1. La deuxième portion 72 s'étend transversalement, selon la direction YY', vers l'intérieur du sillon longitudinal

6 à partir d'une paroi latérale 61 sur une largeur W2 et longitudinalement, selon la direction XX', sur une épaisseur T2. Selon l'invention, les relations suivantes entre les caractéristiques géométriques précédemment décrites sont vérifiées : W2>=0.25*W, T2<=min (3 mm ; 1/3*T1), W1>=0.5*W et T1>=H1.

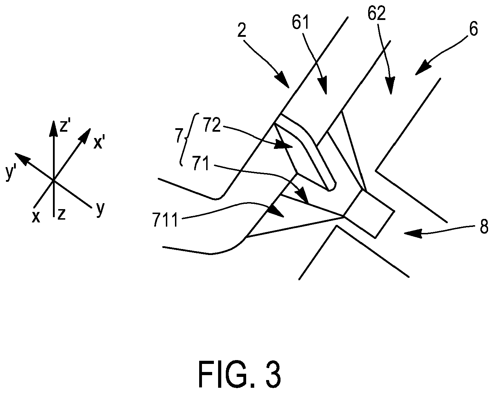

La figure 3 est une vue en perspective d'une protubérance 7 positionnée à l'intersection d'un sillon longitudinal 6 et d'un creux transversal 8 selon un mode de réalisation préféré de l'invention. La première portion 71 comprend des faces latérales 711 formant, avec la direction transversale YY', un angle au plus égal à 45°. La première portion 71 a une forme de pyramide dont les faces latérales inclinées 711 facilitent la mobilité des pierres dans le sillon longitudinal, et donc leur éjection à l'extérieur de la bande de roulement, au cours du roulage du pneumatique. La deuxième portion 72 anti-bruit a les mêmes caractéristiques que précédemment.

Les inventeurs ont plus particulièrement étudié cette invention pour un pneumatique de dimension 445/95R25 destiné à être monté sur une grue mobile. Selon la norme ETRTO, un tel pneumatique doit être capable de porter une charge égale à 6700 kg, lorsqu'il est gonflé à une pression égale à 9 bars.

Les inventeurs ont comparé, dans la dimension de pneumatique 445/95R25, un pneumatique comprenant une bande de roulement ayant une sculpture avec des protubérances anti-bruit et chasse-pierres, conformément à l'invention, et un pneumatique de référence comprenant une bande de roulement ayant une sculpture identique à celle de l'invention mais sans protubérances anti-bruit et chasse-pierres.

Le tableau 1 ci-dessous présente les caractéristiques d'une protubérance anti-bruit et chasse-pierres de la bande de roulement selon l'invention :

[Tableau 1]

| Caractéristiques d'une protubérance anti-bruit et chasse-pierres de la bande de roulement | Valeurs |
|---|---|
| Profondeur H du sillon | 21 mm |
| Largeur W du sillon | 18 mm |
| Hauteur H' de la protubérance | 21 mm |
| Hauteur H2 de la deuxième portion de protubérance (anti-bruit) | 13 mm |
| Largeur W2 de la deuxième portion de protubérance (anti-bruit) | 6 mm |
| Epaisseur T2 de la deuxième portion de protubérance (anti-bruit) | 1 mm |
| Hauteur H1 de la première portion de protubérance (chasse-pierres) | 8 mm |
| Largeur W1 de la première portion de protubérance (chasse-pierres) | 18 mm |
| Epaisseur T1 de la première portion de protubérance (chasse-pierres) | 24 mm |

Le pneumatique de l'exemple étudié a un diamètre extérieur égal à 1471 mm, ce qui correspond à une longueur développée L de bande de roulement égale à 4621 mm. La bande de roulement comprend, dans chacun de ses deux sillons longitudinaux centraux et sur toute sa longueur L, 112 protubérances anti-bruit et chasse-pierres alternativement positionnées sur les parois en vis-à-vis du sillon longitudinal, constituant 56 paires de protubérances formant 56 barrières anti-bruit. Lorsque ce pneumatique est gonflé à une pression égale à 9 bars et soumis à une charge égale à 6700 kg, l'aire de contact de sa bande de roulement contient, pour un sillon longitudinal donné, 3 paires de protubérances, formant chacune une barrière anti-bruit s'étendant sur la quasi-totalité de la largeur du sillon longitudinal.

Par rapport au pneumatique de référence, le pneu conforme à l'invention a généré un bruit extérieur inférieur de 3 dB (A), sur un test de bruit externe de type « coast-by ». Par ailleurs, un test de roulage sur un sol recouvert de pierres calibrées a montré que la bande de roulement d'un pneumatique conforme à l'invention retenait beaucoup moins de pierres que celle du pneumatique de référence, sans blocage de pierres au niveau des protubérances.

La bande de roulement selon l'invention, développée pour un pneumatique usuel soumis à une pression de gonflage, peut également être utilisée pour un bandage non pneumatique.

**Revendications**

1. Bande de roulement (1) de pneumatique pour véhicule lourd, destinée à entrer en contact avec un sol par l'intermédiaire d'une surface de roulement (2) et comprenant des découpures (3) délimitant des blocs (4) en caoutchouc s'étendant à partir d'une surface de fond (5) selon une direction radiale (ZZ'),

- au moins une découpure (3) étant un sillon longitudinal (6), délimité par deux parois latérales (61) en vis-à-vis raccordées entre elles par un fond de sillon (62), et s'étendant sur toute la longueur L de la bande de roulement (1) selon une direction longitudinale (XX'),
- tout sillon longitudinal (6) ayant une profondeur H, mesurée entre la surface de roulement (2) et le fond de sillon (62) selon une direction radiale (ZZ'), et une largeur W, mesurée entre les deux parois latérales (61) dans la surface de roulement (2) selon une direction transversale (YY'),
- au moins un sillon longitudinal (6) comprenant une distribution longitudinale de protubérances (7) adossées à l'une ou l'autre des parois latérales (6), deux protubérances (7) consécutives, non nécessairement adossées à la même paroi latérale (61), étant espacées d'un pas P,

**caractérisée en ce que** toute protubérance (7) du sillon longitudinal (6) s'étend radialement vers l'extérieur à partir du fond de sillon (62) sur une hauteur H' au moins égale à 0.9 fois la profondeur H du sillon (6) **et en ce que** toute protubérance (7) du sillon longitudinal (6) comprend une première portion (71), s'étendant radialement vers l'extérieur à partir du fond de sillon (62) sur une hauteur H1, transversalement vers l'intérieur du sillon longitudinal (6) à partir d'une paroi latérale (61) sur une largeur W1 et longitudinalement sur une épaisseur T1, et une deuxième portion (72), s'étendant radialement vers l'extérieur à partir de la première portion (71) sur une hauteur H2, transversalement vers l'intérieur du sillon longitudinal (6) à partir d'une paroi latérale (61) sur une largeur W2 et longitudinalement sur une épaisseur T2, de telle sorte que les relations suivantes sont vérifiées :

$$H'=H1+H2$$

$$0.6*H'<=H2<=0.9*H'$$

$$W2>=0.25*W$$

$$T2<=min(3\ mm;\ 1/3*T1)$$

$$W1>=0.5*W$$

$$T1>=H1$$

2. Bande de roulement (1) selon la revendication 1, **dans laquelle** les protubérances (7) du sillon longitudinal (6) sont alternativement adossées à l'une ou l'autre des parois latérales (61).

3. Bande de roulement (1) selon l'une des revendications 1 ou 2, **dans laquelle** les protubérances (7) du sillon longitudinal (6) sont deux à deux espacées d'un pas P au plus égal à 0.1 fois la longueur L de la bande de roulement (2).

4. Bande de roulement (1) selon l'une quelconque des revendications 1 à 3, **dans laquelle** toute protubérance (7) du sillon longitudinal (6) s'étend radialement vers l'extérieur à partir du fond de sillon (62) sur une hauteur H' égale à la profondeur H du sillon (6).

5. Bande de roulement (1) selon l'une quelconque des revendications 1 à 4, **dans laquelle** la deuxième portion (72) s'étend longitudinalement sur une épaisseur T2 au moins égale à 1 mm.

6. Bande de roulement (1) selon l'une quelconque des revendications 1 à 5, **dans laquelle** la deuxième portion (72) s'étend vers l'intérieur du sillon longitudinal (6) à partir d'une paroi latérale (61) sur une largeur W2 au plus égale à 0.75 fois la largeur W du sillon longitudinal (6).

7. Bande de roulement (1) selon l'une quelconque des revendications 1 à 6, **dans laquelle** la première portion (71) s'étend longitudinalement sur une épaisseur T1 au plus égale à 4 fois la hauteur H1.

8. Bande de roulement (1) selon l'une quelconque des revendications 1 à 7, **dans laquelle** la première portion (71) comprend des faces latérales (711) formant, avec la direction transversale (YY'), un angle au plus égal à 45°.

9. Bande de roulement (1) selon l'une quelconque des revendications 1 à 8, le sillon longitudinal (6) comprenant au moins une intersection avec une rainure transversale (8), **dans laquelle** toute intersection du sillon longitudinal (6) et d'une rainure transversale (8) est pourvue d'une protubérance (7).

10. Bande de roulement (1) selon la revendication 9, **dans laquelle** la première portion (71) s'étend vers l'intérieur du sillon longitudinal (6) à partir d'une paroi latérale (61) sur une largeur W1 au plus égale à 2 fois la largeur W du sillon longitudinal (6).

11. Pneumatique pour véhicule lourd, de préférence un véhicule lourd de génie civil de type grue mobile, comprenant une bande de roulement (1) selon l'une quelconque des revendications 1 à 10.


**Patentansprüche**

1. Laufstreifen (1) eines Reifens für ein Schwerlastfahrzeug, der dazu bestimmt ist, über eine Lauffläche (2) mit einem Boden in Kontakt zu gelangen, und Ausschnitte (3) umfasst, die Blöcke (4) aus Kautschuk begrenzen, die sich von einer Bodenfläche (5) aus entlang einer radialen Richtung (ZZ') erstrecken,

- wobei mindestens ein Ausschnitt (3) eine Längsrille (6) ist, die durch zwei einander gegenüber liegende Seitenwände (61) begrenzt wird, die durch einen Rillenboden (62) untereinander verbunden sind und sich über die gesamte Länge L des Laufstreifens (1) entlang einer Längsrichtung (XX') erstrecken,
- wobei jede Längsrille (6) eine Tiefe H, gemessen zwischen der Lauffläche (2) und dem Rillenboden (62) entlang einer radialen Richtung (ZZ'), und eine Breite W, gemessen zwischen den beiden Seitenwänden (61) in der Lauffläche (2) entlang einer Querrichtung (YY'), aufweist,
- wobei mindestens eine Längsrille (6) eine Längsverteilung von Vorsprüngen (7) umfasst, die an die eine oder die andere der Seitenwände (6) angesetzt sind, wobei zwei aufeinander folgende Vorsprünge (7), die nicht unbedingt an dieselbe Seitenwand (61) angesetzt sind, um eine Schrittweite P beabstandet sind,

**dadurch gekennzeichnet, dass** sich jeder Vorsprung (7) der Längsrille (6) radial nach außen von dem Rillenboden (62) aus über eine Höhe H' erstreckt, die mindestens das 0,9-Fache der Tiefe H der Rille (6) beträgt, und dass jeder Vorsprung (7) der Längsrille (6) einen ersten Abschnitt (71) umfasst, der sich radial nach außen von dem Rillenboden (62) aus über eine Höhe H1, quer nach innerhalb der Längsrille (6) von einer Seitenwand (61) aus über eine Breite W1 und längs über eine Dicke T1 erstreckt, und einen zweiten Abschnitt (72), der sich radial nach außen von dem ersten Abschnitt (71) aus über eine Höhe H2, quer nach innerhalb der Längsrille (6) von einer Seitenwand (61) aus über eine Breite W2 und längs über eine Dicke T2 erstreckt, so dass die folgenden Gleichungen erfüllt sind:

$$H'=H1+H2$$

$$0,6*H'<=H2<=0,9*H'$$

$$W2>=0,25*W$$

$$T2<=\min(3\ mm;\ 1/3*T1)$$

$$W1>=0,5*W$$

$$T1>=H1$$

2. Laufstreifen (1) nach Anspruch 1, wobei die Vorsprünge (7) der Längsrille (6) abwechselnd an die eine oder die andere der Seitenwände (61) angesetzt sind.

3. Laufstreifen (1) nach einem der Ansprüche 1 oder 2, wobei die Vorsprünge (7) der Längsrille (6) paarweise um eine Schrittweite P beabstandet sind, die höchstens das 0,1-Fache der Länge L des Laufstreifens (2) beträgt.

4. Laufstreifen (1) nach einem der Ansprüche 1 bis 3, wobei sich jeder Vorsprung (7) der Längsrille (6) radial nach außen von dem Rillenboden (62) aus über eine Höhe H' erstreckt, die gleich der Tiefe H der Rille (6) ist.

5. Laufstreifen (1) nach einem der Ansprüche 1 bis 4, wobei sich der zweite Abschnitt (72) längs über eine Dicke T2 erstreckt, die mindestens 1 mm beträgt.

6. Laufstreifen (1) nach einem der Ansprüche 1 bis 5, wobei sich der zweite Abschnitt (72) nach innerhalb der Längsrille (6) von einer Seitenwand (61) aus über eine Breite W2 erstreckt, die höchstens das 0,75-Fache der Breite W der Längsrille (6) beträgt.

7. Laufstreifen (1) nach einem der Ansprüche 1 bis 6, wobei sich der erste Abschnitt (71) längs über eine Dicke T1 erstreckt, die höchstens das 4-Fache der Höhe H1 beträgt.

8. Laufstreifen (1) nach einem der Ansprüche 1 bis 7, wobei der erste Abschnitt (71) seitliche Seiten (711) umfasst, die mit der Querrichtung (YY') einen Winkel von höchstens 45° bilden.

9. Laufstreifen (1) nach einem der Ansprüche 1 bis 8, wobei die Längsrille (6) mindestens einen Schnittpunkt mit einer Quernut (8) umfasst, wobei jeder Schnittpunkt der Längsrille (6) und einer Quernut (8) mit einem Vorsprung (7) versehen ist.

10. Laufstreifen (1) nach Anspruch 9, wobei sich der erste Abschnitt (71) nach innerhalb der Längsrille (6) von einer Seitenwand (61) aus über eine Breite W1 erstreckt, die höchstens das 2-Fache der Breite W der Längsrille (6) beträgt.

11. Reifen für ein Schwerlastfahrzeug, bevorzugt ein Schwerlastbaufahrzeug vom Typ Mobilkran, umfassend einen Laufstreifen (1) nach einem der Ansprüche 1 bis 10.

## Claims

1. Tyre tread (1) for a heavy vehicle, which tread is intended to come into contact with the ground via a tread surface (2) and comprises cuts (3) delimiting rubber blocks (4) that extend from a bottom surface (5) in a radial direction (ZZ'),

   - at least one cut (3) being a longitudinal groove (6), delimited by two opposite lateral walls (61) that are connected to each other by a groove bottom (62), and extending over the entire length L of the tread (1) in a longitudinal direction (XX'),
   - any longitudinal groove (6) having a depth H, measured between the tread surface (2) and the groove bottom (62) in a radial direction (ZZ'), and a width W, measured between the two lateral walls (61) in the tread surface (2) in a transverse direction (YY'),
   - at least one longitudinal groove (6) comprising a longitudinal distribution of protuberances (7) that bear against one or the other of the lateral walls (6), two consecutive protuberances (7), which do not necessarily bear against the same lateral wall (61), being spaced apart by a pitch P,

   **characterized in that** any protuberance (7) of the longitudinal groove (6) extends radially outwards from the groove bottom (62) over a height H' at least equal to 0.9 times the depth H of the groove (6) and **in that** any protuberance (7) of the longitudinal groove (6) comprises a first portion (71), extending radially outwards from the groove bottom (62) over a height H1, transversely towards the inside of the longitudinal groove (6) from a lateral wall (61) over a width W1 and longitudinally over a thickness T1, and a second portion (72), extending radially outwards from the first portion (71) over a height H2, transversely towards the inside of the longitudinal groove (6) from a lateral wall (61) over a width W2 and longitudinally over a thickness T2, such that the following relationships are satisfied:

$$H'=H1+H2$$

$$0.6*H'<=H2<=0.9*H'$$

$$W2>=0.25*W$$

$$T2<=\min(3 \text{ mm}; \ 1/3*T1)$$

$$W1>=0.5*W$$

$$T1>=H1$$

2.  Tread (1) according to Claim 1, wherein the protuberances (7) of the longitudinal groove (6) alternately bear against one or the other of the lateral walls (61).

3.  Tread (1) according to either of Claims 1 and 2, wherein the protuberances (7) of the longitudinal groove (6) are spaced apart in pairs by a pitch P at most equal to 0.1 times the length L of the tread (2).

4.  Tread (1) according to any one of Claims 1 to 3, wherein any protuberance (7) of the longitudinal groove (6) extends radially outwards from the groove bottom (62) over a height H' equal to the depth H of the groove (6).

5.  Tread (1) according to any one of Claims 1 to 4, wherein the second portion (72) extends longitudinally over a thickness T2 at least equal to 1 mm.

6.  Tread (1) according to any one of Claims 1 to 5, wherein the second portion (72) extends towards the inside of the longitudinal groove (6) from a lateral wall (61) over a width W2 at most equal to 0.75 times the width W of the longitudinal groove (6).

7.  Tread (1) according to any one of Claims 1 to 6, wherein the first portion (71) extends longitudinally over a thickness T1 at most equal to 4 times the height H1.

8.  Tread (1) according to any one of Claims 1 to 7, wherein the first portion (71) comprises lateral faces (711) that form, with the transverse direction (YY'), an angle at most equal to 45°.

9.  Tread (1) according to any one of Claims 1 to 8, the longitudinal groove (6) comprising at least one intersection with a transverse groove (8), wherein any intersection of the longitudinal groove (6) and a transverse groove (8) is provided with a protuberance (7) .

10. Tread (1) according to Claim 9, wherein the first portion (71) extends towards the inside of the longitudinal groove (6) from a lateral wall (61) over a width W1 at most equal to 2 times the width W of the longitudinal groove (6).

11. Tyre for a heavy vehicle, preferably a heavy construction plant vehicle of mobile crane type, which tyre comprises a tread (1) according to any one of Claims 1 to 10.

FIG. 1

FIG. 2A

FIG. 2B

FIG. 2C

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3178669 A
- WO 0132448 A
- WO 2009082394 A
- WO 2013171172 A
- WO 2012001031 A